# EUROPEAN PATENT SPECIFICATION

(11) **EP 2 299 183 B1**
(45) Date of publication and mention of the grant of the patent: **12.07.2017**
(21) Application number: 10172760.0
(22) Date of filing: 13.08.2010
(51) Int. Cl.: F24D 12/02

(54) **Water heating apparatus**
Wassererwärmungsvorrichtung
Appareil de chauffage de l'eau

(30) Priority: 26.08.2009 JP 2009195836
(43) Date of publication of application: 23.03.2011
(73) Proprietor: Paloma Co., Ltd., Mizuho-Ku, Nagoya-Shi, Aichi (JP)
(72) Inventor: Kobayashi, Masakazu, Nagoya-shi Aichi (JP)
(74) Representative: Prüfer & Partner mbB Patentanwälte · Rechtsanwälte

(56) References cited:
- EP-A2- 0 731 322
- DE-A1- 3 118 025
- DE-A1- 3 407 302
- FR-A1- 2 570 475

## Description

### 1. Field of the invention

The present invention relates to a latent heat-recovery type water heating apparatus comprising a first heat exchanger and a second heat exchanger.

### 2. Description of related art

In a latent heat-recovery type water heating apparatus, there are provided a first heat exchanger for exchanging heat between sensible heat contained in an exhaust gas and water flowing through a heat exchanger tube, and a second heat exchanger for exchanging heat between latent heat contained in the exhaust gas and water flowing through the heat exchanger tube. The first heat exchanger is arranged upstream of an exhaust gas passage through which an exhaust gas from a burner flows, and downstream of a water flow passage through which water flows, whereas the second heat exchanger is arranged downstream of the exhaust gas passage and upstream of the water flow passage, so that high thermal efficiency is achieved.

However, according to this water heating apparatus, when used in winter or in a cold district, there may be a possibility that water remaining in a heat exchanger tube of a heat exchanger freezes, which leads the water heating apparatus to become unavailable. In particular, water is apt to freeze in the second heat exchanger because water remains, even after drainage of water, inside the heat exchange tube of the second heat exchanger whose diameter is smaller for the purpose of recovering latent heat. Japanese Laid-open Patent Publication No. 2008-151473 discloses a second heat exchanger having a plurality of heat exchanger tubes surrounded with a frame-type heat conduction member. The frame-type heat conduction member is in contact with the heat exchanger tubes and with a heater, so that heat is transmitted from the heater to the heat exchanger tubes through the heat conduction member to thereby prevent the heat exchanger tubes from freezing.

However, this arrangement of the second heat exchanger requires to heat the additional heat conduction member and the heater for a long period of time, which increases the cost. Further, the heat conduction member can only locally heat the heat exchanger tubes, and thus heat is not transmitted entirely over the heat exchanger, resulting that an antifreeze effect is not sufficiently performed.

EP 0 731 322 A2 discloses a generic water heating apparatus comprising an exhaust gas passage through which an exhaust gas from a burner flows; a water flow passage through which water flows; a first heat exchanger configured to exchange heat between sensible heat contained in the exhaust gas and water flowing through a heat exchanger tube, and arranged at upstream side of the exhaust gas passage and downstream side of the water flow passage; a second heat exchanger configured to exchange heat between latent heat contained in the exhaust gas and water flowing through a heat exchanger tube, and arranged downstream of the exhaust gas passage and upstream of the water flow passage; and a water supply pipe for supplying water to the second heat exchanger.

DE 31 18 025 A1 discloses a water heating apparatus corresponding to the preamble of the claim 1. DE 34 07 302 A1 discloses a heat source having first and second heat exchangers, a water flow passage and a water supply pipe. There is also a piping between the water flow passage and the water supply pipe. The water is drained at an outlet. FR 2 570 475 A1 discloses a condensing boiler.

In view of the above, the present invention seeks to provide a water heating apparatus which is simple in structure without requiring a heater and a heat conduction member and which can immediately eliminate a failure due to freezing water in the second heat exchanger.

This object is achieved by the water heating apparatus having the features of claim 1.

In the water heating apparatus according to claim 1, a water drain pipe is connected to the connecting pipe at an intermediate portion between the second heat exchanger and the first heat exchanger, and the bypass pipe is connected between the water supply pipe at the upstream side of the second heat exchanger and the water drain pipe in an up-and-down direction.

With the above configuration of the water heating apparatus according to claim 1 by simply providing the bypass pipe, it is possible to use the burner even if the second heat exchanger freezes, so that the heat exchanger tube of the second heat exchanger can be entirely heated by the exhaust gas from the burner. Therefore, even if the second heat exchanger freezes, the second heat exchanger can be defrosted quickly by the combustion heat of the burner, which results no influence on the usability.

In addition to the above advantages, water does not remain in the bypass pipe after drainage of water from the water drain pipe.

Further, it is possible to prevent water from remaining in the bypass pipe while ensuring the minimum amount of water supply to the first heat exchanger.

### BRIEF DESCRIPTION OF THE DRAWINGS

The above aspect, other advantages and further features of the present invention will become more apparent by describing in detail illustrative, non-limiting embodiments thereof with reference to the accompanying drawings, in which:
FIG. 1 is a schematic circuit diagram of a bath/hot water supply system;
FIG. 2 is a perspective view illustrating a structure for bypassing a second heat exchanger according to the invention; and
FIG. 3 is a perspective view illustrating a modification of the structure for bypassing the second heat exchanger.
This embodiment does not fall under the scope of claim 1.

### DETAILED DESCRIPTION OF THE INVENTION

With reference to the accompanying drawings, one exemplary embodiment of the present invention will be described.

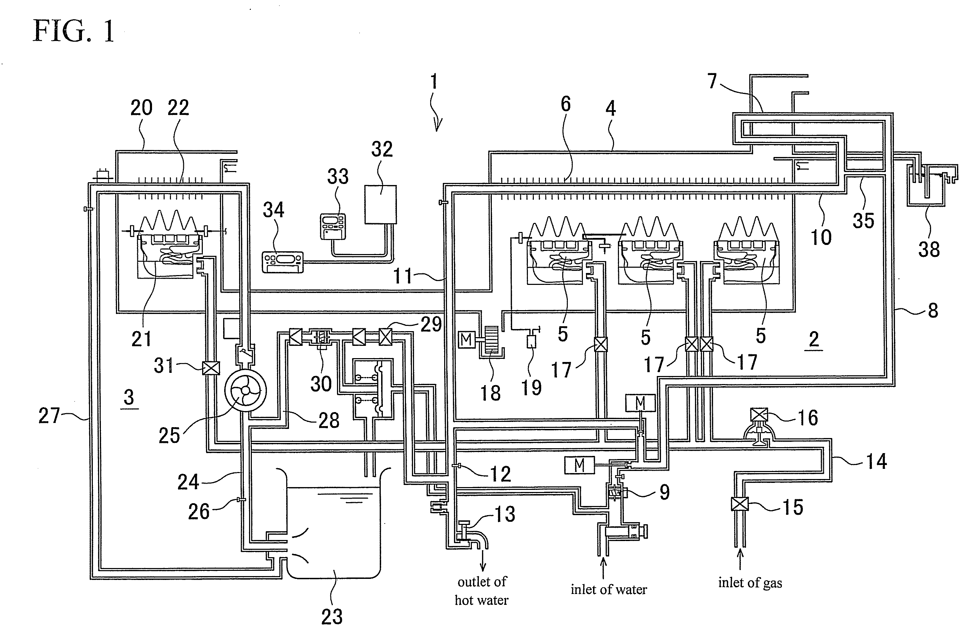

As seen in FIG. 1, a bath/hot water supply system 1 includes a hot water supply circuit 2 as a water heating apparatus and a bath circuit 3. A hot water supply combustion chamber 4 which comprises hot water supply burners 5, a first heat exchanger 6, and a second heat exchanger 7 is disposed in the hot water supply circuit 2, so that tap water is heated to supply as hot water. The bath circuit 3 is disposed in a bath combustion chamber 20 and comprises a bath burner 21 and a bath heat exchanger 22. The bath circuit 3 is used for reheating water in the bath, etc.

In the hot water supply circuit 2, a water supply pipe 8 for supplying tap water from waterworks is connected at an inlet of the second heat exchanger 7. A hot water supply amount sensor 9 is provided in the water supply pipe 8. An outlet of the second heat exchanger 7 and an inlet of the first heat exchanger 6 are connected through a connecting pipe 10 for supplying hot water heated by the second heat exchanger 7 to the first heat exchanger 6. A hot water supply pipe 11 for supplying hot water heated by the first heat exchanger 6 is connected at an outlet of the first heat exchanger 6. A hot water supply thermistor 12 is provided in the hot water supply pipe 11. A reference number 13 indicates a hot water tap.

In the hot water supply combustion chamber 4, the first heat exchanger 6 is arranged upstream of an exhaust gas passage through which exhaust gases from the hot water supply burners 5 flow, and the second heat exchanger 7 is arranged downstream of the exhaust gas passage, so that heat is exchanged between water flowing through heat exchanger tubes of the first and second heat exchangers 6, 7 and the exhaust gases from the hot water supply burners 5. Gas piping 14 for supplying gas to the hot water supply burners 5 is provided with a gas cock solenoid valve 15, a gas supply proportional control valve 16, and hot water supply switching solenoid valves 17 each of which is positioned in a branch pipe extending to the corresponding hot water supply burner 5. The gas cock solenoid valve 15, the gas supply proportional control valve 16, and the hot water supply switching solenoid valves 17 are arranged in this order from the upstream side of the gas piping 14. A fan 18 is provided at a lower side of the hot water supply combustion chamber 4, which supplies combustion air to the hot water supply burners 5 and the bath burner 21.

In the bath circuit 3, return piping 24 and supply piping 27 are connected between the bath heat exchanger 22 and a bath tub 23. The return piping 24 is provided with a circulating pump 25 and a bath thermistor 26. Further, the return piping 24 is connected with a water filling pipe 28 which is branched from the hot water supply pipe 11 and equipped with a hot water supply solenoid valve 29 and a filling water quantity sensor 30. When the hot water supply solenoid valve 29 provided in the water filling pipe 28 is opened, hot water heated in the hot water supply circuit 2 can be supplied to the bath tub 23. A switching solenoid valve 31 is provided in a branch pipe extending between the gas piping 14 and the bath burner 21. Reference numbers 32, 33, and 34 indicate a controller, a hot water supply remote control, and a bath remote control, respectively.

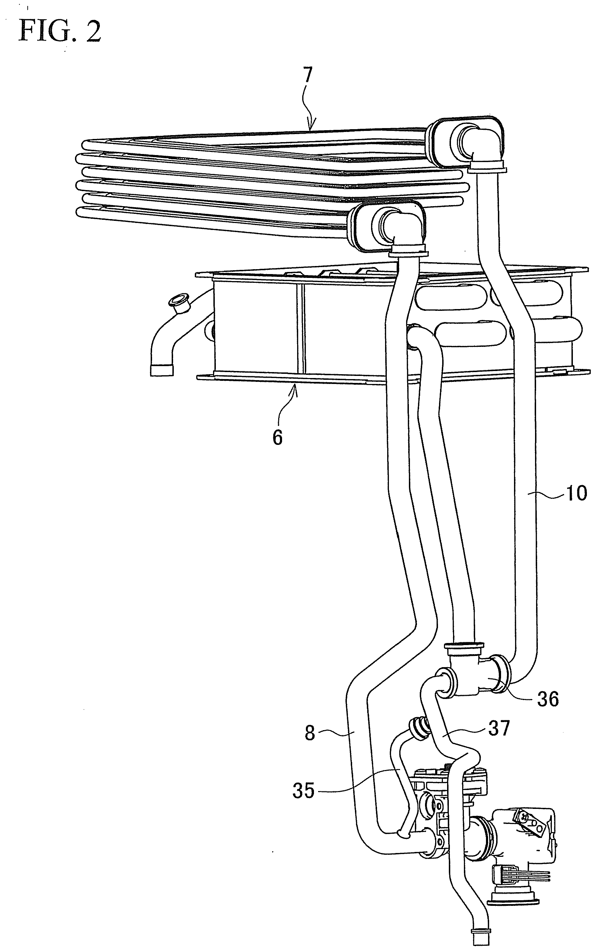

A bypass pipe 35 for bypassing the second heat exchanger 7 is connected to a water flow passage in the hot water supply circuit 2. To be more specific, as best seen in FIG. 2, a joint 36 is provided at an intermediate portion of the connecting pipe 10, and a water drain pipe 37 is connected to the joint 36. The bypass pipe 35 is connected in an up-and-down direction between the water drain pipe 37 and the water supply pipe 8. The inner diameter of the bypass pipe 35 is determined such that an upper end portion (i.e., downstream end) thereof that is adjacent and connected to the water drain pipe 37 has a diameter (e.g., 3.0 mm) for obtaining a minimum amount of water (e.g., 2.5 L/min) required for burning operations of the hot water supply burners 5 in the hot water supply circuit 2 and the remaining portion of the bypass pipe 35 has a diameter (e.g., 4.8 mm) greater than that of the upper end portion. The reason for reducing the diameter of the upper end portion is that if the inner diameter is too large, the amount of water supplied to the second heat exchanger 7 becomes smaller, resulting in a decrease in the thermal efficiency. On the contrary, the reason for increasing the diameter of the remaining portion is that if the diameter is too smaller throughout the entire length of the bypass pipe 35, drainage of water from the bypass pipe 35 may not be performed reliably.

According to the bath/hot water supply system 1 configured as described above, a normal hot water supply is performed in the following manner.

The hot water tap 13 provided in the hot water supply pipe 11 is first opened, so that water flows into equipment. When the hot water supply amount sensor 9 detects the flow of water, the controller 32 causes the fan 18 to operate for a predetermined period of time to discharge (i.e., prepurge) exhaust gases remaining in the hot water supply combustion chamber 4 and the bath combustion chamber 20. Thereafter, the gas cock solenoid valve 15 and the respective hot water supply switching solenoid valves 17 provided in the gas piping 14 are opened, and the gas supply proportional control valve 16 is opened at a predetermined degree of valve opening, so that gas is supplied to the hot water supply burners 5. An igniter 19 is then actuated and the hot water supply burners 5 are lit.

Exhaust gases from the hot water supply burners 5 flow first through the first heat exchanger 6 where heat can be exchanged with water flowing inside the heat exchanger tube of the first heat exchanger 6 and second through the second heat exchanger 7 where heat can be exchanged with water flowing inside the heat exchanger tube of the second heat exchanger 7, and finally discharged to the outside. Accordingly, sensible heat is recovered at the first heat exchanger 6 and latent heat is recovered at the second heat exchanger 7, so that heated water can be supplied through the hot water tap 13. Drainage generated at the second heat exchanger 7 is neutralized by a neutralizing device 38 before discharge.

The controller 32 monitors the temperature of hot water by means of the hot water supply thermistor 12 provided in the hot water supply pipe 11. The controller 32 further controls opening and closing of the hot water supply switching solenoid valves 17, adjusts the gas supply proportional control valve 16 to a desired degree of valve opening, and controls the rotation speed of the fan 18 to continuously adjust the amount of air supply, such that the temperature of supplied hot water is adjusted to a setting temperature that is set through the hot water supply remote control 33 or the bath remote control 34. When the hot water tap 13 is closed, the controller 32 detects that the hot water supply amount sensor 9 stops sending a signal and closes the gas cock solenoid valve 15 and the hot water supply switching solenoid valves 17 to extinguish the hot water supply burners 5. The controller 32 further operates the fan 18 for a predetermined period of time (i.e., post purge).

Meanwhile, in the bath circuit 3, when an automatic bath fill button on the hot water supply remote control 33 or the bath remote control 34 is pressed, the controller 32 opens the hot water supply solenoid valve 29 in the water filling pipe 28 for allowing water to flow into the hot water supply circuit 2 and then the hot water supply burners 5 is operated. Hot water from the hot water supply pipe 11 flows through the water filling pipe 28 and the return piping 24, and is supplied to the bath tub 23. When the filling water quantity sensor 30 provided in the water filing pipe 28 detects that the amount of water reaches the setting amount, the controller 32 causes the hot water supply solenoid valve 29 to be closed to stop the supply of hot water, and then extinguishes the burners 5.

Next, the circulating pump 25 operates to circulate hot water from the bath tub 23 within the bath circuit 3. During the circulation of hot water, the bath thermistor 26 provided in the return piping 24 monitors the temperature of the hot water, and when this temperature becomes the setting temperature or lower, the bath burner 21 is lit. Accordingly, bath circulating water circulating between the bath heat exchanger 22 and the bath tub 23 is heated up to the setting temperature. When the temperature of the hot water reaches the setting temperature, the combustion using the bath burner 21 is stopped and the circulating pump 25 is also stopped.

In order to prevent freezing in the winter-time, a valve (not shown) provided in the water drain pipe 37 can be opened. This makes it possible to discharge water in the second heat exchanger 7 to the outside through the connecting pipe 10, the joint 36, and the water drain pipe 37. However, since the second heat exchanger 7 employs a thin heat exchanger tube, water is not completely drain out and some water remains in the heat exchanger tube, so that the remaining water may freeze. In this state, even if the hot water tap 13 is opened, tap water from the water supply pipe 8 does not flow into the second heat exchanger 7. According to the invention, since the bypass pipe 35 bypasses the second heat exchanger 7, tap water flows directly into the first heat exchanger 6 from the bypass pipe 35 through the connecting pipe 10, so that a flow of water within the equipment can be ensured and the hot water supply burners 5 can ignite for combustion. Therefore, hot water can be supplied even if the second heat exchanger 7 freezes.

When the hot water supply burners 5 ignite and start the combustion, the second heat exchanger 7 is entirely heated and the frozen portion is defrosted. This can restore a flow of water through the second heat exchanger 7 and therefore latent heat can be recovered. Since water flows through the bypass pipe 35 having a smaller diameter, the supply of hot water is restricted until the frozen second heat exchanger 7 is restored. However, the second heat exchanger 7 can be defrosted for a short time and the amount of hot water supply recovers quickly, which has little effect on the usability.

According to the bath/hot water supply system 1 configured as described above, the bypass pipe 35 is arranged in the water flow passage in such a position as to bypass the second heat exchanger 7, and is designed to allow at least the predetermined minimum amount of water required for the burner combustion operation to flow therethrough into the first heat exchanger 6. Therefore, by simply providing the bypass pipe 35, it is possible to use the hot water supply burners 5 even if the second heat exchanger 7 freezes, so that the heat exchanger tube of the second heat exchanger 7 can be entirely heated by the exhaust gas from the burners 5. Therefore, in case where the second heat exchanger 7 freezes, it could be defrosted quickly by the combustion heat of the hot water supply burners 5, which does not affect on the usability.

Further, the water drain pipe 37 is connected in the water flow passage at an intermediate portion between the second heat exchanger 7 and the first heat exchanger 6, and the bypass pipe 35 is connected in the up-and-down direction between the upstream side of the second heat exchanger 7 and the water drain pipe 37. Therefore, water does not remain in the bypass pipe 35 after drainage of water from the water drain pipe 37.

Furthermore, the downstream end of the bypass pipe 35 has a smaller inner diameter than that of the other part to allow the predetermined minimum amount of water. Therefore, it is possible to prevent water from remaining in the bypass pipe 35 while ensuring the predetermined minimum amount of water supply to the first heat exchanger 6.

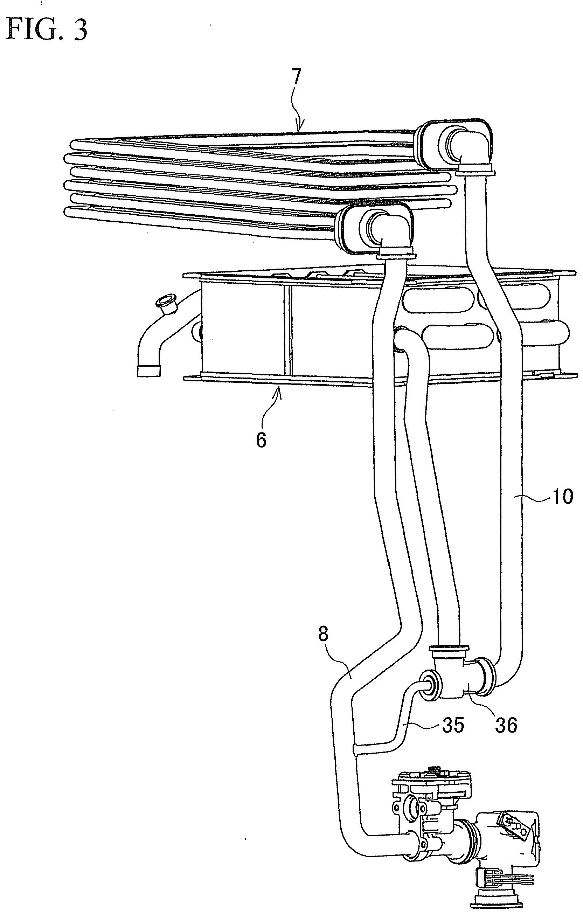

According to the above exemplary embodiment according to the invention, the bypass pipe 35 is connected to the connecting pipe 10 through the water drain pipe 37. However, in the case where the water drain pipe is arranged in a different position, as best seen in FIG. 3, the bypass pipe 35 can be directly connected to the joint 36. As already stated, that embodiment does not fall under the scope of claim 1. Further, the inner diameter of the bypass pipe 35 is not limited to the reduced diameter that is reduced only at the downstream end of the bypass pipe 35 corresponding to the minimum amount of water. As long as water may not remain in the bypass pipe 35, the bypass pipe 35 may have the same inner diameter throughout its length corresponding to the minimum amount of water.

Other modifications may be available. For example, a normally closed solenoid valve may be provided in the bypass pipe and when the second heat exchanger 7 freezes, the controller 32 may open the solenoid valve. In this instance, it is possible to determine that the second heat exchanger 7 is in a frozen state if the flow rate detected at the water filling pipe 28 is zero or lower than a predetermined value after the automatic bath fill button on the remote controller 33 or 34 is pressed, and then the controller 32 opens the solenoid valve. When the detected flow rate exceeds the predetermined value, the controller 32 may determine that second heat exchanger 7 is defrosted and the solenoid valve is closed.

Other than the above, the bath/hot water supply system 1 according to the above embodiment includes the hot water supply circuit 2 provided with a plurality of hot water supply burners 5. However, the hot water supply circuit may have only one hot water supply burner 5. Of course, the present invention is not limited to the bath/hot water supply system 1 as described above including the bath circuit 3 in addition to the hot water supply circuit 2, and may be applicable to a single water heating apparatus without a bath circuit 3.

## Claims

1. A water heating apparatus (2) comprises:
an exhaust gas passage through which an exhaust gas from a burner (5) flows;
a connecting pipe (10) through which water flows;
a first heat exchanger (6) configured to exchange heat between sensible heat contained in the exhaust gas and water flowing through a heat exchanger tube, and arranged at upstream side of the exhaust gas passage and downstream side of the connecting pipe (10);
a second heat exchanger (7) configured to exchange heat between latent heat contained in the exhaust gas and water flowing through a heat exchanger tube, and arranged downstream of the exhaust gas passage and upstream of the connecting pipe (10), wherein the connecting pipe (10) is provided for supplying water heated by the second heat exchanger (7) to the first heat exchanger (6);
a water supply pipe (8) for supplying water to the second heat exchanger (7);
a water drain pipe (37) being connected to the connecting pipe (10) at an intermediate portion between the second heat exchanger (7) and the first heat exchanger (6), and
a bypass pipe (35) being connected between the connecting pipe (10) and the water supply pipe (8) in such a position as to bypass the second heat exchanger (7) and designed to allow a at least predetermined minimum amount of water required for a burner combustion operation to flow therethrough into the first heat exchanger (6),
**characterized in that** the bypass pipe (35) is connected to the connecting pipe (10) through the water drain pipe (37), that is between the water supply pipe (8) at the upstream side of the second heat exchanger (7) and the water drain pipe (37), in an up-and-down direction, such that water does not remain in the bypass pipe (35) after drainage of water from the water drain pipe (37).

## Patentansprüche

1. Ein Wasserheizgerät (2) weist auf:
eine Abgaspassage durch welche ein Abgas von einem Brenner (5) strömt;
ein Verbindungsrohr (10) durch welches Wasser strömt;
einen ersten Wärmetauscher (6), der dazu konfiguriert ist, Wärme zwischen spürbarer Wärme, die in dem Abgas enthalten ist, und Wasser, das durch eine Wärmetauscherröhre strömt, auszutauschen, und der an einer Seite stromaufwärts der Abgaspassage und stromabwärts des Verbindungsrohrs (10) angeordnet ist;
ein zweiter Wärmetauscher (7) der dazu konfiguriert ist, Wärme zwischen einer latenten Wärme, welche in dem Abgas enthalten ist, und Wasser, welches durch eine Wärmetauscherröhre strömt, auszutauschen, und der an einer Seite stromabwärts der Abgaspassage und stromaufwärts des Verbindungsrohrs (10) angeordnet ist, wobei das Verbindungsrohr (10) dazu vorgesehen ist, Wasser, welches von dem zweiten Wärmetauscher (7) erwärmt wurde, zu dem ersten Wärmetauscher (6) zuzuführen;
ein Wasserzuführrohr (8), um Wasser zu dem zweiten Wärmetauscher (7) zuzuführen;
ein Wasserablaufrohr (37), welches mit dem Verbindungsrohr (10) an einem Zwischenabschnitt zwischen dem zweiten Wärmetauscher (7) und dem ersten Wärmetauscher (6) verbunden ist, und
ein Umgehungsrohr (35), welches zwischen dem Verbindungsrohr (10) und dem Wasserzuführrohr (8) in derartiger Position verbunden ist, um den zweiten Wärmetauscher (7) zu umgehen, und das dazu bestimmt ist, einer zumindest vorbestimmten Minimalmenge an Wasser, welche für einen Brennerverbrennungsbetrieb benötigt wird, zu erlauben, dahindurch in den ersten Wärmetauscher (6) zu strömen,
**dadurch gekennzeichnet, dass** das Umgehungsrohr (35) mit dem Verbindungsrohr (10) durch das Wasserablaufrohr (37) verbunden ist, also zwischen dem Wasserzuführrohr (8) an der Seite stromaufwärts des zweiten Wärmetauschers (7) und dem Wasserablaufrohr (37), in einer Auf-und-ab-Richtung derart, dass Wasser nicht in dem Umgehungsrohr (35) nach Ablauf von Wasser von dem Wasserablaufrohr (37) zurückbleibt.

## Revendications

1. Appareil de chauffage d'eau (2) comprenant :
un passage de gaz d'échappement à travers lequel s'écoule un gaz d'échappement provenant d'un brûleur (5) ;
un tuyau de raccordement (10) à travers lequel de l'eau s'écoule ;
un premier échangeur de chaleur (6) configuré pour échanger de la chaleur entre de la chaleur sensible contenue dans le gaz d'échappement et de l'eau s'écoulant à travers un tube échangeur de chaleur, et agencé au niveau d'un côté amont du passage de gaz d'échappement et un côté aval du tuyau de raccordement (10) ;
un second échangeur de chaleur (7) configuré pour échanger de la chaleur entre de la chaleur latente contenue dans le gaz d'échappement et de l'eau s'écoulant à travers un tube échangeur de chaleur, et agencé en aval du passage de gaz d'échappement et en amont du tuyau de raccordement (10), le tuyau de raccordement (10) étant prévu pour fournir de l'eau chauffée par le second échangeur de chaleur (7) au premier échangeur de chaleur (6) ;
un tuyau de fourniture d'eau (8) destiné à fournir de l'eau au second échangeur de chaleur (7) ;
un tuyau de purge d'eau (37) qui est raccordé au tuyau de raccordement (10) à une position intermédiaire entre le second échangeur de chaleur (7) et le premier échangeur de chaleur (6), et
un tuyau de contournement (35) qui est raccordé entre le tuyau de raccordement (10) et le tuyau de fourniture d'eau (8) dans une position permettant de contourner le second échangeur de chaleur (7) et conçu pour permettre un écoulement à travers le premier échangeur de chaleur (6) d'au moins une quantité minimale prédéterminée d'eau requise pour une opération de combustion du brûleur,
**caractérisé en ce que** le tuyau de contournement (35) est raccordé au tuyau de raccordement (10) par l'intermédiaire du tuyau de purge d'eau (37), à savoir entre le tuyau de fourniture d'eau (8) au niveau du côté amont du second échangeur de chaleur (7) et le tuyau de purge d'eau (37), dans une direction haut-bas, de telle sorte que l'eau ne reste pas dans le tuyau de contournement (35) après une purge de l'eau depuis le tuyau de purge d'eau (37).
